# EUROPÄISCHE PATENTANMELDUNG

(11) **EP 1 862 686 A2**
(43) Veröffentlichungstag der Anmeldung: **05.12.2007**
(21) Anmeldenummer: 07009596.3
(22) Anmeldetag: 14.05.2007
(51) Int. Cl.: F16D 13/74

(54) **Drehmomentübertragungseinrichtung**

(30) Priorität: 01.06.2006 DE 102006025586
(71) Anmelder: LuK Lamellen und Kupplungsbau Beteiligungs KG, 77815 Bühl (DE)
(72) Erfinder: Bates, Ian Richard Joseph, Rubgy CV22 6LG (GB)

(57) **Zusammenfassung**

Die Erfindung betrifft eine Drehmomentübertragungseinrichtung im Antriebsstrang eines Kraftfahrzeugs zur Drehmomentübertragung zwischen einer Antriebseinheit und einem Getriebe, mit einer Kupplungsglocke (1;41), die eine Anlagefläche (8) aufweist, die mit Hilfe von Befestigungsmitteln, wie Schrauben, an einer zugehörigen Montagefläche an einem Antriebseinheitsgehäuse in dichter Anlage gehalten ist.

Die Erfindung zeichnet sich dadurch aus, dass in der Anlagefläche der Kupplungsglocke mindestens ein in axialer Richtung offener Eintrittskanal (21-24) für ein Kühlmedium, wie Luft, ausgespart ist.

## Beschreibung

Die Erfindung betrifft eine Drehmomentübertragungseinrichtung im Antriebsstrang eines Kraftfahrzeugs zur Drehmomentübertragung zwischen einer Antriebseinheit und einem Getriebe, mit einer Kupplungsglocke, die eine Anlagefläche aufweist, die mit Hilfe von Befestigungsmitteln, wie Schrauben, an einer zugehörigen Montagefläche an einem Antriebseinheitsgehäuse in dichter Anlage gehalten ist.

Aufgabe der Erfindung ist es, eine Drehmomentübertragungseinrichtung gemäß dem Oberbegriff des Anspruchs 1 im Hinblick auf die Temperaturentwicklung im Inneren der Kupplungsglocke zu optimieren.

Die Aufgabe ist bei einer Drehmomentübertragungseinrichtung im Antriebsstrang eines Kraftfahrzeugs zur Drehmomentübertragung zwischen einer Antriebseinheit und einem Getriebe, mit einer Kupplungsglocke, die eine Anlagefläche aufweist, die mit Hilfe von Befestigungsmitteln, wie Schrauben, an einer zugehörigen Montagefläche an einem Antriebseinheitsgehäuse in dichter Anlage gehalten ist, dadurch gelöst, dass in der Anlagefläche der Kupplungsglocke mindestens ein in axialer Richtung offener Eintrittskanal für ein Kühlmedium, wie Luft, ausgespart ist. Der Eintrittskanal mündet in der Nähe einer in der Kupplungsglocke drehbar angeordneten Kupplungseinrichtung oder einer Drehschwingungsdämpfungseinrichtung, insbesondere eines Schwungrads. Durch die Drehung der Kupplungseinrichtung und/oder der Drehschwingungsdämpfungseinrichtung, insbesondere des Schwungrads, wird Luft, die in einem Ringraum zwischen der Kupplungseinrichtung und/oder der Drehschwingungsdämpfungseinrichtung und der Kupplungsglocke vorhanden ist, ebenfalls in Drehung versetzt. Dadurch wird Luft von außerhalb der Kupplungsglocke durch den Eintrittskanal in die Kupplungsglocke hinein geschleppt oder mitgerissen beziehungsweise gezogen. Dadurch wird die Kühlung in der Kupplungsglocke deutlich verbessert.

Ein bevorzugtes Ausführungsbeispiel der Drehmomentübertragungseinrichtung ist dadurch gekennzeichnet, dass in der Anlagefläche der Kupplungsglocke mindestens ein in axialer Richtung offener Eintrittskanal und mindestens ein in axialer Richtung offener Austrittskanal für ein Kühlmedium, wie Luft, ausgespart sind. Durch die Kombination von Ein- und Austrittskanälen wird die Luftzirkulation deutlich verbessert.

Ein weiteres bevorzugtes Ausführungsbeispiel der Drehmomentübertragungseinrichtung ist dadurch gekennzeichnet, dass der Austrittskanal eine Austrittsauslassöffnung aufweist, die radial außerhalb und in Drehrichtung einer in der Kupplungsglocke drehbar angeordneten Kupplungseinrichtung versetzt zu einer Austrittseinlassöffnung angeordnet ist. Der Austrittskanal kann gerade oder gekrümmt zwischen der Austrittseinlassöffnung und der Austrittsauslassöffnung verlaufen.

Ein weiteres bevorzugtes Ausführungsbeispiel der Drehmomentübertragungseinrichtung ist dadurch gekennzeichnet, dass der Austrittskanal entlang einer Sekante zu einem Umfang der Anlagefläche verläuft. Durch den geraden Verlauf des Austrittskanals wird die Herstellung vereinfacht.

Ein weiteres bevorzugtes Ausführungsbeispiel der Drehmomentübertragungseinrichtung ist dadurch gekennzeichnet, dass der Eintrittskanal eine Eintrittsauslassöffnung aufweist, die radial innerhalb und in Drehrichtung einer in der Kupplungsglocke drehbar angeordneten Kupplungseinrichtung versetzt zu einer Eintrittseinlassöffnung angeordnet ist. Der Eintrittskanal kann gerade oder gekrümmt zwischen der Eintrittseinlassöffnung und der Eintrittsauslassöffnung verlaufen.

Ein weiteres bevorzugtes Ausführungsbeispiel der Drehmomentübertragungseinrichtung ist dadurch gekennzeichnet, dass der Eintrittskanal entlang einer Sekante zu einem Umfang der Anlagefläche verläuft. Durch den geraden Verlauf des Eintrittskanals wird die Herstellung vereinfacht.

Ein weiteres bevorzugtes Ausführungsbeispiel der Drehmomentübertragungseinrichtung ist dadurch gekennzeichnet, dass innerhalb der Anlagefläche Durchgangslöcher ausgespart sind. Die Durchgangslöcher dienen zum Durchführen von Befestigungsmitteln, wie Schrauben, mit deren Hilfe die Kupplungsglocke an dem Antriebseinheitsgehäuse befestigbar ist.

Ein weiteres bevorzugtes Ausführungsbeispiel der Drehmomentübertragungseinrichtung ist dadurch gekennzeichnet, dass die Anlagefläche, zumindest teilweise, im Wesentlichen die Gestalt einer Kreisringscheibe aufweist, die von zwei konzentrischen Kreisen begrenzt wird. Die konzentrischen Kreise können durch Einbuchtungen und/oder Ausbuchtungen unterbrochen sein. Der Verlauf der Kanäle ist gemäß einem wesentlichen Aspekt der Erfindung an Tangenten zu den konzentrischen Kreisen angenähert.

Ein weiteres bevorzugtes Ausführungsbeispiel der Drehmomentübertragungseinrichtung ist dadurch gekennzeichnet, dass mehrere Eintrittskanäle und/oder mehrere Austrittskanäle über den Umfang verteilt angeordnet sind. Vorzugsweise sind drei Eintrittskanäle und drei Austrittskanäle insbesondere im Wechsel über den Umfang verteilt angeordnet.

Ein weiteres bevorzugtes Ausführungsbeispiel der Drehmomentübertragungseinrichtung ist dadurch gekennzeichnet, dass die Kanäle eine Breite von 8 bis 10 mm aufweisen. Dieser Bereich hat sich im Rahmen der vorliegenden Erfindung als besonders vorteilhaft erwiesen.

Ein weiteres bevorzugtes Ausführungsbeispiel der Drehmomentübertragungseinrichtung ist dadurch gekennzeichnet, dass die Kupplungsglocke mindestens ein zusätzliches Durchtrittsloch aufweist, das mit mindestens einer Ventileinrichtung ausgestattet ist. Mit der Ventileinrichtung kann der Eintritt und/oder Austritt von Kühlmedium durch das zusätzliche Durchtrittsloch gesteuert oder geregelt werden.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
Figur 1 eine Kupplungsglocke einer erfindungsgemäßen Drehmomentübertragungseinrichtung gemäß einem ersten Ausführungsbeispiel in der Draufsicht und
Figur 2eine ähnliche Kupplungsglocke wie in Figur 1 gemäß einem weiteren Ausführungsbeispiel in der Draufsicht.

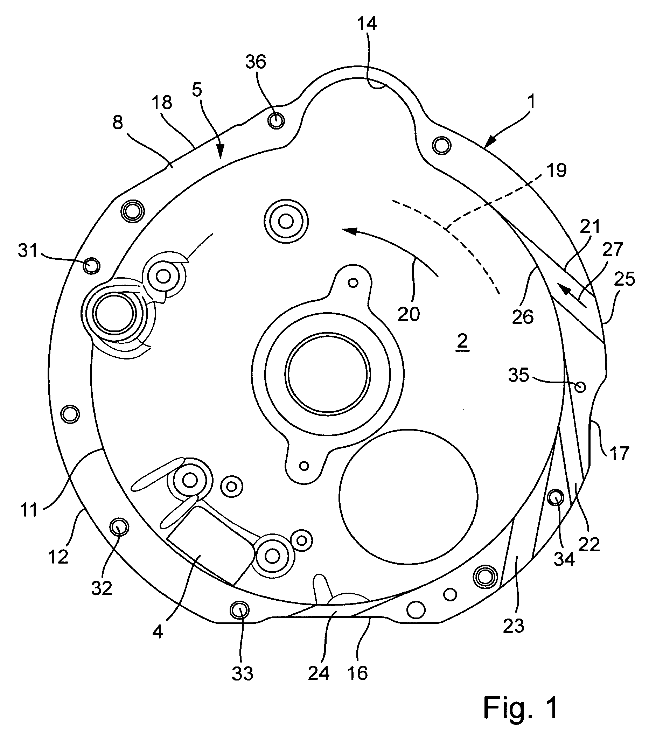

In Figur 1 ist eine Kupplungsglocke 1 in der Draufsicht dargestellt. Die Kupplungsglocke 1 umfasst einen glockenförmigen Kupplungsglockenkörper 2, der ein Durchtrittsloch 4 aufweist, das den Durchtritt von Luft aus dem Inneren der Kupplungsglocke 1 nach draußen und/oder in der entgegengesetzten Richtung ermöglicht. Der Kupplungsglockenkörper 2 weist an seinem offenen Ende einen Umfangsrand 5 auf, an dem eine ebene Anlagefläche 8 ausgebildet ist. Die Anlagefläche 8 hat im Wesentlichen die Gestalt einer Kreisringscheibe, die sich zwischen zwei konzentrischen Kreisen 11, 12 erstreckt. Die Kreisringscheibe ist durch eine Ausbuchtung 14 und Einbuchtungen 16, 17 sowie eine Abflachung 18 unterbrochen. Die Anlagefläche 8 kommt im montierten Zustand der Kupplungsglocke 1 an einer (nicht dargestellten) Montagefläche eines Motorgehäuses unter Dichtwirkung zur Anlage.

Im Inneren der Kupplungsglocke 1 ist eine Kupplungseinrichtung mit einem Schwungrad in Richtung eines Pfeils 20 drehbar angeordnet. Ein kreisbogenförmiger Ausschnitt der Kontur des Schwungrads ist durch eine gestrichelte Linie 19 angedeutet. In der Nähe der Kontur 19 des Schwungrads münden Eintrittskanäle 21 bis 24 in den Innenraum der Kupplungsglocke 1. Die Eintrittskanäle 21 bis 24 sind in der Anlagefläche 8 ausgespart und in der Papierebene offen. Der Eintrittskanal 21 weist radial außen eine Eintrittseinlassöffnung 25 und radial innen eine Eintrittsauslassöffnung 26 auf. Die Eintrittsauslassöffnung 26 ist in Drehrichtung 20 der Kupplungseinrichtung gegenüber der Eintrittseinlassöffnung 25 versetzt. Der Eintrittskanal 21 wird in Umfangsrichtung von zwei Sekanten begrenzt. Durch einen Pfeil 27 ist eintretende Luft angedeutet.

Wenn sich die Kupplungseinrichtung, insbesondere das Schwungrad, im Inneren der Kupplungsglocke 1 dreht, dann wird die in radialer Richtung zwischen der Kupplungseinrichtung und der Kupplungsglocke 1 angeordnete Luft mitgerissen und zumindest teilweise ebenfalls in Drehung versetzt. Die sich in dem Ringraum befindliche und drehende Luft bewirkt, dass Luft von außerhalb der Kupplungsglocke 1 durch die Eintrittskanäle 21 bis 24 in das Innere der Kupplungsglocke 1 gesaugt wird. Durch das Durchtrittsloch 4 kann Luft aus dem Inneren der Kupplungsglocke 1 entweichen, so dass ein Druckausgleich erfolgt.

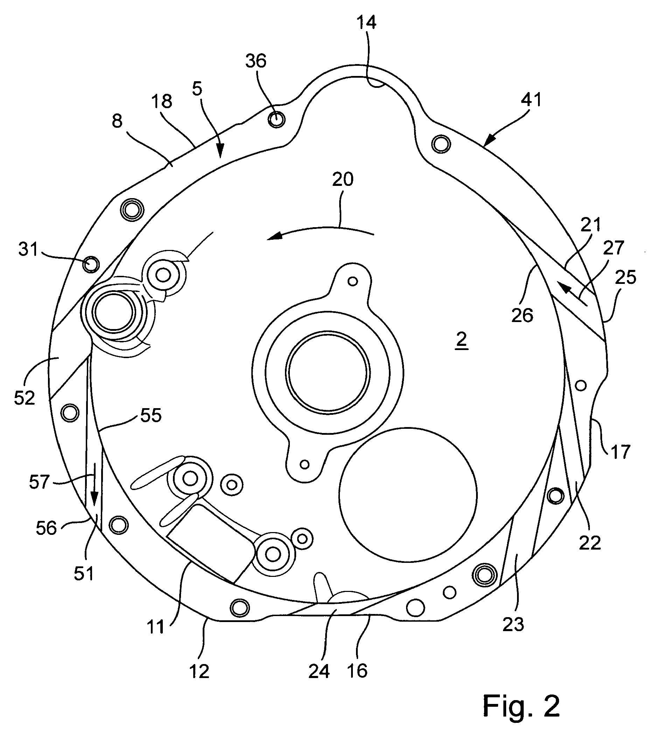

In Figur 2 ist eine Kupplungsglocke 41 in der Draufsicht dargestellt, die der Kupplungsglocke 1 aus Figur 1 ähnelt. Zur Bezeichnung gleicher Teile werden gleiche Bezugszeichen verwendet. Um Wiederholungen zu vermeiden, wird auf die vorangegangene Beschreibung der Figur 1 verwiesen. Im Folgenden wird hauptsächlich auf die Unterschiede zwischen den beiden Ausführungsbeispielen eingegangen.

Die in Figur 2 dargestellte Kupplungsglocke 41 weist zusätzlich zu den Eintrittskanälen 21 bis 24 zwei Austrittskanäle 51, 52 auf, die den Austritt von Luft aus dem Inneren der Kupplungsglocke 41 ermöglichen. Das Durchtrittsloch (4 in Figur 1) ist bei der Kupplungsglocke 41 nicht vorhanden.

Der Austrittskanal 51 weist radial innen eine Austrittseinlassöffnung 55 und radial außen eine Austrittsauslassöffnung 56 auf, die in Drehrichtung 20 der Kupplungseinrichtung versetzt zu der Austriftseinlassöffnung 55 angeordnet ist. Die durch den Austrittskanal 51 austretende Luft ist durch einen Pfeil 57 angedeutet.

Die Befestigung der Kupplungsglocke 1; 41 an dem (nicht dargestellten) Motorgehäuse erfolgt mit Hilfe von Befestigungselementen, wie Schrauben, die sich durch Durchgangslöcher 31 bis 36 hindurch erstrecken, die in der Anlagefläche 8 ausgespart sind. Die Durchgangslöcher 31 bis 36 sind nicht im Bereich der Kanäle 21 bis 24 und 55, 56 angeordnet.

### Bezugszeichenliste

- 1.: Kupplungsglocke
- 2.: Kupplungsglockenkörper
- 4.: Durchtrittsloch
- 5.: Umfangsrand
- 8.: Anlagefläche
- 11.: Kreis
- 12.: Kreis
- 14.: Ausbuchtung
- 16.: Einbuchtung
- 17.: Einbuchtung
- 18.: Abflachung
- 19.: Kontur
- 20.: Pfeil
- 21.: Eintrittskanal
- 22.: Eintrittskanal
- 23.: Eintrittskanal
- 24.: Eintrittskanal
- 25.: Eintrittseinlassöffnung
- 26.: Eintrittseinlassöffnung
- 27.: Pfeil
- 31.: Durchgangsloch
- 32.: Durchgangsloch
- 33.: Durchgangsloch
- 34.: Durchgangsloch
- 35.: Durchgangsloch
- 36.: Durchgangsloch
- 41.: Kupplungsglocke
- 51.: Austrittskanal
- 52.: Austrittskanal
- 55.: Austrittseinlassöffnung
- 56.: Austrittseinlassöffnung
- 57.: Pfeil

## Patentansprüche

1. Drehmomentübertragungseinrichtung im Antriebsstrang eines Kraftfahrzeugs zur Drehmomentübertragung zwischen einer Antriebseinheit und einem Getriebe, mit einer Kupplungsglocke (1 ;41), die eine Anlagefläche (8) aufweist, die mit Hilfe von Befestigungsmitteln, wie Schrauben, an einer zugehörigen Montagefläche an einem Antriebseinheitsgehäuse in dichter Anlage gehalten ist, **dadurch gekennzeichnet, dass** in der Anlagefläche (8) der Kupplungsglocke (1;41) mindestens ein in axialer Richtung offener Eintrittskanal (21-24) für ein Kühlmedium, wie Luft, ausgespart ist.

2. Drehmomentübertragungseinrichtung nach Anspruch 1, **dadurch gekennzeichnet, dass** in der Anlagefläche (8) der Kupplungsglocke (1) mindestens ein in axialer Richtung offener Eintrittskanal (21-24) und mindestens ein in axialer Richtung offener Austrittskanal (51,52) für ein Kühlmedium, wie Luft, ausgespart sind.

3. Drehmomentübertragungseinrichtung nach Anspruch 2, **dadurch gekennzeichnet, dass** der Austrittskanal (51) eine Austrittsauslassöffnung (56) aufweist, die radial außerhalb und in Drehrichtung einer in der Kupplungsglocke (1) drehbar angeordneten Kupplungseinrichtung versetzt zu einer Austrittseinlassöffnung (55) angeordnet ist.

4. Drehmomentübertragungseinrichtung nach Anspruch 3, **dadurch gekennzeichnet, dass** der Austrittskanal (51,52) entlang einer Sekante zu einem Umfang der Anlagefläche (8) verläuft.

5. Drehmomentübertragungseinrichtung nach einem der vorhergehenden Ansprüche, **dadurch gekennzeichnet, dass** der Eintrittskanal (21) eine Eintrittsauslassöffnung (26) aufweist, die radial innerhalb und in Drehrichtung einer in der Kupplungsglocke (1;41) drehbar angeordneten Kupplungseinrichtung versetzt zu einer Eintrittseinlassöffnung (25) angeordnet ist.

6. Drehmomentübertragungseinrichtung nach Anspruch 5, **dadurch gekennzeichnet, dass** der Eintrittskanal (21-24) entlang einer Sekante zu einem Umfang der Anlagefläche (8) verläuft.

7. Drehmomentübertragungseinrichtung nach einem der vorhergehenden Ansprüche, **dadurch gekennzeichnet, dass** innerhalb der Anlagefläche (8) Durchgangslöcher (31-36) ausgespart sind.

8. Drehmomentübertragungseinrichtung nach einem der vorhergehenden Ansprüche, **dadurch gekennzeichnet, dass** die Anlagefläche (8), zumindest teilweise, im Wesentlichen die Gestalt einer Kreisringscheibe aufweist, die von zwei konzentrischen Kreisen (11,12) begrenzt wird.

9. Drehmomentübertragungseinrichtung nach einem der vorhergehenden Ansprüche, **dadurch gekennzeichnet, dass** mehrere Eintrittskanäle (21-24) und/oder mehrere Austrittskanäle (51,52) über den Umfang verteilt angeordnet sind.

10. Drehmomentübertragungseinrichtung nach einem der vorhergehenden Ansprüche, **dadurch gekennzeichnet, dass** die Kanäle (21-24,51,52) eine Breite von 8 bis 10 mm aufweisen.

11. Drehmomentübertragungseinrichtung nach einem der vorhergehenden Ansprüche, **dadurch gekennzeichnet, dass** die Kupplungsglocke (1) mindestens ein zusätzliches Durchtrittsloch (4) aufweist, das mit mindestens einer Ventileinrichtung ausgestattet ist.
